Europäisches Patentamt

European Patent Office

Office européen des brevets

(19)

(11) Numéro de publication: **0219919 B1**

(12) **FASCICULE DE BREVET EUROPEEN**

(45) Date de publication du fascicule du brevet:
18.07.90

(51) Int. Cl.⁵: **G10K 11/34**, G01S 7/52, G01S 15/02, H03H 9/15

(21) Numéro de dépôt: 86201837.1

(22) Date de dépôt: 22.10.86

(54) Appareil d'exploration de milieux par échographie ultrasonore comprenant un réseau d'éléments transducteurs piézoélectriques.

(30) Priorité: 25.10.85 FR 8515849

(43) Date de publication de la demande:
29.04.87 Bulletin 87/18

(45) Mention de la délivrance du brevet:
18.07.90 Bulletin 90/29

(84) Etats contractants désignés:
DE FR GB

(56) Documents cités:
EP-A- 0 162 515
EP-A- 0 190 805
GB-A- 2 035 010

HEWLETT-PACKARD JOURNAL,
vol. 34, no. 10, octobre 1983, pages 17-22, Amstelveen, NL; J.D. LARSON III: "An acoustic transducer array for medical imaging - part I"
IEEE 1981 ULTRASONICS SYPOSIUM PROCEEDINGS, vol. 2, Chicago, 14-16 octobre 1981, pages 673-684, IEEE, New York, US; J.D. LARSON: "Non-ideal radiators in phased array transducers"
1963 IEEE INTERNATIONAL CONVENTION RECORD, vol. 11, partie 9, 25-28 mars 1963, pages 96-101, IEEE, New York, US; E.L. FABIAN: "The design of rectangular bar transducers for use with ultrasonic dispersive strip

(73) Titulaire: **LABORATOIRES D'ELECTRONIQUE PHILIPS, 3, Avenue Descartes, F-94450 Limell-Brévannes(FR)**
(84) Etats contractants désignés: **FR**

(73) Titulaire: **N.V. Philips' Gloeilampenfabrieken, Groenewoudseweg 1, NL-5621 BA Eindhoven(NL)**
(84) Etats contractants désignés: **DE GB**

(72) Inventeur: **Pesque, Patrick René, Société Civile S.P.I.D. 209 rue de l'Université, F-75007 Paris(FR)**
Inventeur: **Nicolas, Jean-Marie Christophe, Société Civile S.P.I.D. 209 rue de l'Université, F-75007 Paris(FR)**

(74) Mandataire: **Landousy, Christian et al, Société Civile S.P.I.D. 209, Rue de l'Université, F-75007 Paris(FR)**

(56) Documents cités: (suite)
delay lines"
JOURNAL OF THE ACOUSTICAL SOCIETY OF AMERICA,
vol. 38, no. 4, octobre 1965, pages 576-582, New York, US; M. REDWOOD: "Coupling between two modes of vibration in a piezoelectric resonator"

ACTORUM AG

## Description

La présente invention concerne un appareil d'exploration de milieux par échographie ultrasonore comportant un réseau linéaire d'éléments transducteurs piézoelectriques de largeur W associé à un étage comprenant des moyens d'émission répétée de signaux ultrasonores pour l'excitation des transducteurs et à un étage comprenant des moyens de réception et de traitement des échos ultrasonores correspondant aux obstacles rencontrés dans leur direction de propagation par les signaux émis.

La présente invention concerne également, de façon similaire, un appareil d'exploration de milieux par échographie ultrasonore comportant un réseau bidimensionnel d'éléments transducteurs piézoelectriques parallélépipédiques de longueur L et de largeur W associé à un étage comprenant des moyens d'émission répétée de signaux ultrasonores pour l'excitation des transducteurs et à un étage comprenant des moyens de réception et de traitement des échos ultrasonores correspondant aux obstacles rencontrés dans leur direction de propagation par les signaux émis.

De tels appareils sont utilisables essentiellement dans le domaine médical, pour l'examen échographique de tissus biologiques, ou encore dans le domaine du contrôle non destructif de matériaux.

A l'heure actuelle, dans le domaine de l'échographie ultrasonore et notamment lors d'examens aux ultrasons de tissus biologiques en vue d'une aide au diagnostic, on cherche de plus en plus à recueillir des informations quantitatives sur les milieux explorés, par évaluation locale d'un ou de plusieurs paramètres tels que le coefficient différentiel $\beta$ d'atténuation ultrasonore ou le coefficient B/A de non-linéarité acoustique, et à observer les variations de ces paramètres dans les milieux explorés. Des indications précises sont ainsi obtenues sur la nature de ces milieux et leur état pathologique.

La non-linéarité de milieux et particulièrement celle de tissus biologiques se manifeste de la façon suivante. Lors de la traversée du milieu exploré, le train d'ondes ultrasonores émis à une fréquence déterminée génère en chaque point et dans la même direction une onde ultrasonore de fréquence double de celle d'émission et dont l'amplitude est liée à la valeur du coefficient B/A (on rapelle que A et B sont les coefficients respectivement linéaire et quadratique de l'expression traduisant la loi qui relie les variations de pression et les variations de masse volumique du milieu exploré).

L'appareil d'exploration par échographie doit donc, dans ce cas, être équipé d'une structure transductrice à large bande, couvrant au moins une octave. Dans le cas d'une excitation en bande étroite, les structures large bande classiques, du type à plusieurs couches interférentielles d'adaptation (ou couches quart d'onde), sont malheureusement peu sensibles, ce qui n'est pas favorable à la mise en œuvre de l'application ici envisagée où le signal à la fréquence de réception est d'amplitude relativement faible.

Le but de l'invention est donc de proposer un appareil d'exploration de milieux par échographie ultrasonore qui comprend des moyens adaptés à une évaluation quantitative correcte du coefficient B/A de non-linéarité des milieux explorés, et dont notamment la structure transductrice présente une bonne sensibilité au moins à deux fréquences situées sensiblement à une octave l'une de l'autre.

A cet effet, l'appareil selon l'invention est, dans le cas d'un réseau linéaire d'éléments transducteurs, caractérisé en ce que l'épaisseur T desdits éléments transducteurs est égale à la moitié de la longueur d'onde correspondant à une première fréquence F pour laquelle il existe, sur le diagramme bidimensionnel des courbes F.T = f(W/T) de dispersion des fréquences de résonance, un premier mode vibratoire à ladite première fréquence F de résonance et un deuxième mode vibratoire à une deuxième fréquence de résonance égale à ou voisine de 2F, en ce que l'étage d'émission comprend un générateur de signaux d'excitation à ladite première fréquence, le spectre de ces signaux d'excitation excluant au moins ladite deuxième fréquence, et en ce que l'étage de réception et de traitement comprend également des moyens de détection des signaux engendrés à ladite deuxième fréquence et correspondant au deuxième mode vibratoire.

Dans le cas d'un réseau bidimensionnel d'éléments transducteurs, l'appareil selon l'invention est, de façon similaire, caractérisé en ce que l'épaisseur T desdits éléments transducteurs est égale à la moitié de la longueur d'onde correspondant à une première fréquence F pour laquelle il existe, sur le diagramme tridimensionnel des courbes F.T = f(W/T, L/T) de dispersion des fréquences de résonance, un premier mode vibratoire à ladite première fréquence F de résonance et un deuxième mode vibratoire à une deuxième fréquence de résonance égale à ou voisine de 2F, en ce que l'étage d'émission comprend un générateur de signaux d'excitation à ladite première fréquence, le spectre de ces signaux d'excitation excluant au moins ladite deuxième fréquence, et en ce que l'étage de réception et de traitement comprend également des moyens de détection des signaux engendrés à ladite deuxième fréquence et correspondant au deuxième mode vibratoire.

Le document "An acoustic transducer array for medical imaging, part I", J. D. Larson III, octobre 1983, Hewlett-Packard Journal, pp. 17–22, décrit un appareil d'exploration de milieux par échographie ultrasonore dans lequel il est prévu, pour vibrer selon un mode d'épaisseur pur, d'éliminer tous les modes vibratoires autres que celui voulu à l'émission. Ce document ne précise cependant pas ni même ne suggère la structure expressément voulue dans le cas de la présente invention pour l'observation de l'effet non linéaire mentionné, à savoir que l'appareil comprend ici des moyens pour détecter à la réception un deuxième mode vibratoire à une fréquence égale à ou voisine de la fréquence double de celle d'émission, que la structure transductrice doit donc avoir une bonne sensibilité non seulement à cette fréquence d'émission mais aussi à celle correspondant audit deuxième mode vibratoire, et que, l'effet non-linéaire à observer au voisinage de ladite fréquence double étant d'assez faible amplitude, le spectre des signaux d'excitation à l'émission doit expressément exclure cette deuxième fréquence correspondant au deuxième mode vibratoire, car les signaux ainsi émis masqueraient les signaux à détecter.

Le document EP-A 162 515 concerne un dispositif de transduction ultrasonore comprenant une barrette linéaire d'éléments transducteurs piézoélectrique. Le document EP-A 190 805 concerne un appareil d'exploration de tissus biologiques par échographie ultrasonore. Les documents EP-A 162 515 et EP-A 190 805 appartiennent à l'état de la technique visé à l'article 54(3) de la CBE.

En matière de transducteurs ultrasonores appliqués à l'imagerie médicale, on cherche d'ordinaire à ce que la réponse des transducteurs soit brève afin de bénéficier d'une bonne résolution. Dans le cadre de la présente invention, on renonce à cette brièveté, mais on obtient en contrepartie à la réception une résonance du matériau piézoélectrique, c'est-à-dire une bonne sensibilité de la structure transductrice à la fréquence double de celle d'émission, fréquence double à laquelle se produit l'effet non linéaire que l'on veut observer. Disposer de cette bonne sensibilité à ladite fréquence est d'ailleurs avantageux à plusieurs titres, puisque le signal à détecter à cette fréquence double est d'une part d'amplitude faible, d'autre part particulièrement atténué par le milieu exploré par comparaison avec le signal d'émission à fréquence moitié puisque l'atténuation augmente avec la fréquence.

Les particularités de l'invention apparaîtront maintenant de façon plus précise dans la description qui suit et dans les dessins annexés, donnés à titre d'exemple et dans lesquels:

- la figure 1 donne un exemple de diagramme de Fabian-Sato montrant un réseau de courbes de dispersion des fréquences de résonance du matériau piézoélectrique, lorsque ce matériau est une céramique piézoélectrique du type PZT (PXE-5 par exemple), chaque mode observé sur ce réseau étant en fait caractérisé par deux courbes, l'une qui correspond aux fréquences de résonance piézoélectrique (courbe inférieure), et l'autre aux fréquences d'antirésonance, dites de résonance élastique rigidifiée (courbe supérieure) ;
- la figure 2 montre un réseau linéaire d'éléments transducteurs ;
- les figures 3 et 4 montrent deux modes de réalisation d'un appareil d'exploration de milieux par échographie ultrasonore pouvant utiliser une structure transductrice selon l'invention.

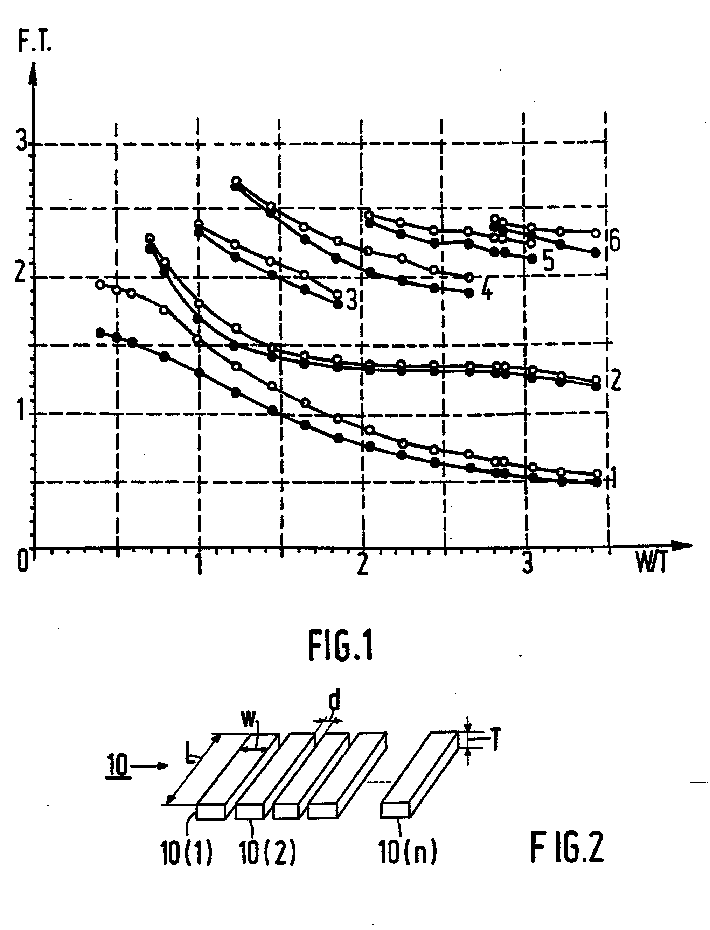

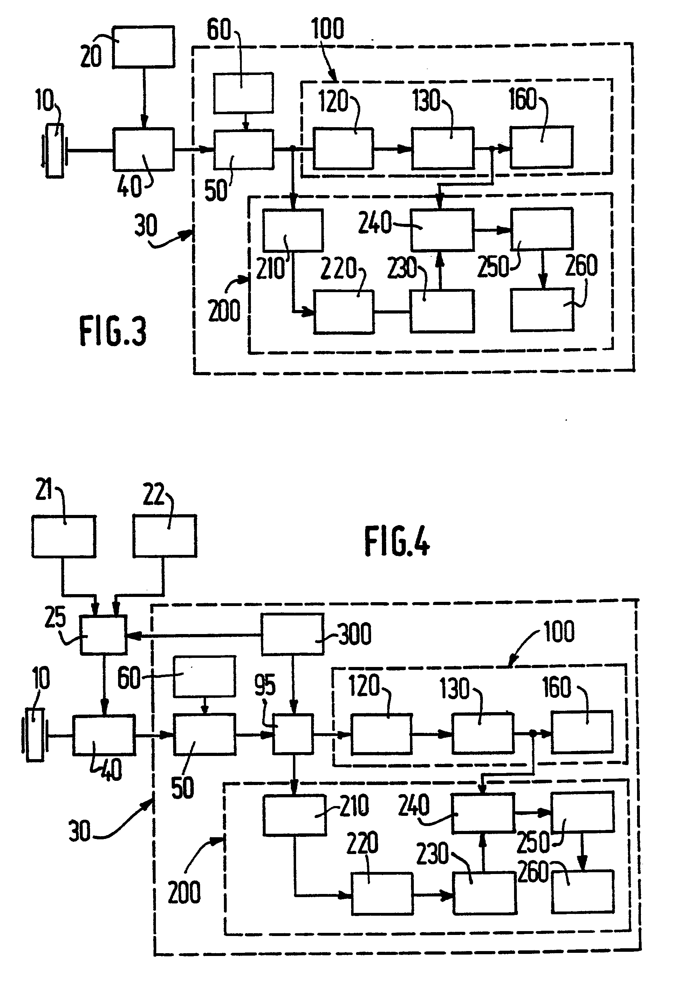

La connaissance des modes de vibration d'éléments transducteurs piézoélectriques peut être effectuée de façon théorique par modélisation, ou de façon expérimentale par caractérisation du matériau piézoélectrique. On établit alors dans ce dernier cas les relations entre les différents paramètres dont dépend la structure transductrice réalisée avec ce matériau. Ces relations peuvent être visualisées notamment sous la forme des diagrammes dits de Fabian-Sato (voir la figure 1) qui représentent les courbes de dispersion des fréquences de résonance du matériau concerné (un exemple de tels diagrammes est aussi constitué par les réseaux de courbes des figures 4 et 8 du brevet cité). Pour les différents modes de vibration possibles, fondamental et harmoniques, du matériau, ces courbes montrent la relation entre le rapport W/T et le produit F.T de la fréquence de résonance (ou d'antirésonance, selon le cas) par l'epaisseur T des éléments transducteurs. Elles permettent de fixer les caractéristiques géométriques de ces éléments en fonction de celui des modes qu'on veut effectivement obtenir.

L'examen d'un tel réseau de courbes renseigne en particulier quant au choix du rapport W/T à effectuer pour obtenir un fonctionnement unimodal de la structure transductrice, ce qui est le mode de fonctionnement traditionnellement recherché. Par exemple, dans le cas du brevet cité, ce résultat est atteint en imposant au rapport W/T une limite supérieure de l'ordre de 0,8. Dans le cas de l'appareil qui va être décrit dans un mode de réalisation préférentiel, le choix des caractéristiques des éléments transducteurs est paradoxalement opéré en s'écartant de ce mode de fonctionnement traditionnel.

Comme le montre la figure 2, dans la réalisation proposée, l'appareil d'exploration de milieux par échographie comprend tout d'abord un réseau 10 d'éléments transducteurs ultrasonores 10(1), 10(2),..., 10(n). Ces éléments transducteurs sont de type traditionnel puisque consistant chacun en une plaquette de matériau piézoélectrique de forme rectangulaire revêtue sur ses faces avant et arrière d'électrodes, non représentées sur la figure. Ces éléments ont une largeur W et sont disposés parallèlement et à égale distance d les uns des autres. Les éléments transducteurs 10(1), 10(2),..., 10(n) ont une épaisseur T et une longueur L, le rapport L/W de cette longueur sur la largeur étant grand.

Ce réseau d'éléments est associé à un étage d'émission répétée de signaux ultrasonores pour l'excitation des transducteurs. L'excitation est en général réalisée par envoi de trains d'impulsions de fréquence déterminée à une cadence de répétition régulière. Le réseau 10 d'éléments est également associé à un étage de réception et de traitement des échos ultrasonores correspondant aux obstacles rencontrés dans leur direction de propagation par les signaux émis dans le milieu à explorer. Un circuit d'aiguillage peut être prévu entre le réseau d'éléments et les étages d'émission et de réception pour relier sélectivement l'un ou l'autre de ces étages audit réseau et éviter ainsi, notamment, l'aveuglement de l'étage de réception par l'étage d'émission. La protection de l'étage de réception peut aussi, plus simplement, être assurée par la mise en place d'un circuit limiteur à diodes en tête de cet étage.

Cette structure générale étant définie, l'utilisation des diagrammes de Fabian-Sato propres au matériau piézoélectrique concerné permet de fixer les caractéristiques géométriques du réseau d'éléments transducteurs selon l'invention. En effet, sur le diagramme (bidimensionnel) des courbes F.T. = f(W/T) de dispersion des fréquences de résonance du matériau concerné, on effectue la recherche d'un mode vibratoire pour lequel, étant données une première fréquence de travail F déterminée et l'épaisseur correspondante T des éléments transducteurs (cette épaisseur T devant être égale, pour un matériau devant vibrer en mode d'épaisseur selon le mode dit en π/2, à la moitié de la longueur d'onde associée à cette fréquence F), il existe également, pour le même matériau, un autre mode vibratoire à une deuxième fréquence égale à ou voisine de la fréquence 2F.

La valeur du rapport W/T correspondant à une telle coexistence de deux modes à fréquence double l'un de l'autre permet alors de connaître la valeur de la largeur W des éléments, ce qui achève la détermination des caractéristiques géométriques du réseau d'éléments transducteurs conforme à l'invention. A une telle détermination, il faut ajouter que, dans le cadre de l'invention, l'étage d'émission, qui comprend un générateur de signaux d'excitation à ladite première fréquence F doit être tel que le spectre des signaux émis exclue ladite deuxième. Cette caractéristique est explicable : pour pouvoir détecter, à la réception, les signaux de faible amplitude de fréquence 2F, il faut éviter que soient émis des signaux de même fréquence 2F qui, en raison de leur amplitude nettement plus importante, masqueraient ceux correspondant à l'existence du phénomène de non-linéarité. On place donc en sortie du générateur de signaux d'excitation un filtre passe-bande centré sur la première fréquence F ou un filtre coupe-bande (dit bouchon) à la deuxième fréquence 2F.

Un exemple de choix de structure transductrice conforme à l'invention est donné en relation avec le diagramme de la figure 1 : pour des éléments piézoélectriques réalisés dans le matériau PXE-5 cité plus haut, une première fréquence F de 2 mégahertz, une épaisseur des éléments de 0,5 millimètre et une largeur de 0,75 millimètre, le mode vibratoire indiqué comme étant de rang 3 sur la figure 1 présente effectivement une deuxième fréquence de résonance de 4 mégahertz, permettant la mesure en réception du phénomène de non-linéarité auquel est associé le coefficient B/A.

Bien entendu, la présente invention n'est pas limitée à l'exemple de réalisation mentionné, à partir duquel des variantes peuvent être proposées sans pour cela sortir du cadre de cette invention. En particulier, on doit préciser que l'invention est applicable de façon rigoureusement similaire au cas d'états vibratoires tridimensionnels, lorsque le dispositif de transduction ultrasonore est une barrette bidimensionnelle rainurée à réseau d'éléments transducteurs piézoélectriques parallélépipédiques. Il suffit pour cela de considérer une généralisation tridimensionnelle des diagrammes de Fabian-Sato, le produit F.T. étant cette fois exprimé en fonction non plus du seul rapport W/T mais des deux rapports de configuration géométrique W/T et L/T. Il est d'ailleurs manifeste qu'un diagramme bidimensionnel de Fabian-Sato est la limite, lorsque L et donc L/T deviennent grands, d'un tel diagramme tridimensionnel de Fabian-Sato.

Par ailleurs, on a vu ci-dessus que l'invention était applicable notamment dans le domaine médical, pour l'examen échographique de tissus et plus particulièrement l'évaluation du coefficient B/A de non-linéarité acoustique des tissus ainsi examinés et l'observation des variations d'un tel paramètre à l'intérieur de ces tissus. Dans cette application, on peut préciser que différents modes de réalisation des circuits associés à la structure transductrice selon l'invention peuvent être proposés, et notamment ceux décrits ci-dessous en référence aux figures 3 et 4 qui montrent deux modes de réalisation d'un appareil d'exploration de milieux par échographie ultrasonore pouvant utiliser une structure transductrice telle que décrite précédemment.

L'appareil décrit en référence à la figure 3 comprend, dans ce premier mode de réalisation, une structure transductrice ultrasonore 10 émettrice et réceptrice associée d'une part à un étage d'émission 20 destiné à permettre l'émission répétée (ici, périodique) d'ondes ultrasonores par le transducteur vers le milieu à examiner et d'autre part à un étage de réception et de traitement 30. L'étage d'émission 20 assure l'émission des ondes ultrasonores, le spectre du signal d'émission ne devant pas contenir la fréquence 2F.

L'étage de réception et de traitement 30 comprend d'abord un amplificateur 50 recevant de la structure 10 les signaux électriques correspondant aux échos ultrasonores reçus par cette structure. Cet amplificateur est associé à un circuit 60 de contrôle automatique de gain qui augmente en fonction du temps le gain dudit amplificateur pour compenser l'effet croissant d'atténuation des ondes ultrasonores au cours de leur propagation. Un circuit d'interface 40 peut être prévu entre la structure 10 et les étages 20 et 30 pour relier sélectivement l'un ou l'autre de ces étages à ladite structure et éviter ainsi, surtout, l'aveuglement de l'étage de réception par l'étage d'émission.

L'étage de réception et de traitement 30 comprend également, en sortie de l'amplificateur 50, deux voies de traitement en parallèle 100 et 200. La première voie 100, voie de traitement traditionnelle, comprend successivement un premier détecteur d'enveloppe, composé d'un premier redresseur 120 et d'un premier filtre passe-bas 130, et un premier dispositif de visualisation 160. La seconde voie 200 comprend successivement un filtre passe-band 210 centré sur la deuxième fréquence 2F, un deuxième redresseur 220, un deuxième filtre passe-bas 230, un comparateur 240 de la sortie des filtres passe-bas 130 et 230, un dérivateur 250, et un deuxième dispositif de visualisation 260. Les deux dispositifs de visualisation ainsi prévus peuvent bien entendu être remplacés par un seul qui disposerait de deux écrans distincts, les deux écrans pouvant dans tous les cas être pilotés de façon indépendante ou simultanée. Cette deuxième voie de traitement 200 est destinée à permettre l'accès à une image traduisant l'évolution du paramètre de non-linéarité acoustique du second ordre dit B/A.

En effet, on peut ici rappeler que, lors de la traversée du milieu étudié, le train d'onde émis génère en chaque point une onde de fréquence double dans la même direction, et qui est fonction de la valeur du coefficient B/A en ce point. Les tissus biologiques étant supposés non dispersifs, la vitesse de propagation des ondes de fréquence double est la même que celle du train d'onde initial. De ce fait le signal échographique obtenu à partir des ondes de fréquence double peut être comparé, à l'aide du comparateur 240, au signal échographique initial. Le résultat de cette comparaison, qui est suivie d'une dérivation permettant l'estimation du paramètre local, reflète donc l'évolution du paramètre B/A . Les images fournies respectivement par la première voie traditionnelle 100 et par la deuxième voie 200 sont dans le cas présent des échographies de type A (représentation d'amplitudes en ordonnées en fonction du temps en abscisse), mais on peut prévoir également l'obtention d'échographies de type B.

Dans un deuxième mode de réalisation représenté sur la figure 4, sur laquelle les éléments identiques à ceux du premier mode de réalisation portent les même références que sur la figure 3, l'étage d'émission comprend un circuit de sélection de signaux d'émission 25 aux entrées duquel sont reliés en parallèle d'une part un générateur traditionnel 21 de signaux d'excitation de la structure transductrice 10 (les plus brefs possible pour améliorer la résolution axiale) et d'autre part un générateur 22 spécialisé pour la mesure de B/A c'est-à-dire fournissant des signaux d'excitation qui consistent au contraire en plusieurs sinusoïdes de fréquence F. L'étage de réception comprend, lui, entre le circuit (50, 60) d'amplification et de contrôle de gain et les voies de traitement 100 et 200, un circuit de sélection de traitement 95 aux sorties duquel sont reliées en parallèle les deux voies de traitement. Ces circuits de sélection 25 et 95 sont commandés simultanément par un circuit d'horloge 300 pour assurer le synchronisme des sélections soit du générateur 21 et de la première voie 100, soit du générateur 22 et de la deuxième voie 200.

**Revendications**

1. Appareil d'exploration de milieux par échographie ultrasonore comportant un réseau linéaire d'éléments transducteurs piézoélectriques de largeur W associé à un étage comprenant des moyens d'émission répétée de signaux ultrasonores pour l'excitation des transducteurs et à un étage comprenant des moyens de réception et de traitement des échos ultrasonores correspondant aux obstacles rencontrés dans leur direction de propagation par les signaux émis, caractérisé en ce que l'épaisseur T desdits éléments transducteurs est égale à la moitié de la longueur d'onde correspondant à une première fréquence F pour laquelle il existe, sur le diagramme bidimensionnel des courbes F.T = f(W/T) de dispersion des fréquences de résonance, un premier mode vibratoire à ladite première fréquence F de résonance et une deuxième mode vibratoire à une deuxième fréquence de résonance égale à ou voisine de 2F, en ce que l'étage d'émission comprend un générateur de signaux d'excitation à ladite première fréquence, le spectre de ces signaux d'excitation excluant au moins ladite deuxième fréquence, et en ce que l'étage de réception et de traitement comprend également des moyens de détection des signaux engendrés à ladite deuxième fréquence et correspondant au deuxième mode vibratoire.

2. Appareil d'exploration de milieux par échographie ultrasonore comportant un réseau bidimensionnel d'éléments transducteurs piézoélectriques parallélépipédiques de longueur L et de largeur W associé à un étage comprenant des moyens d'émission répétée de signaux ultrasonores pour l'excitation des transducteurs et à un étage comprenant des moyens de réception et de traitement des échos ultrasonores correspondant aux obstacles rencontrés dans leur direction de propagation par les signaux émis, caractérisé en ce que l'épaisseur T desdits éléments transducteurs est égale à la moitié de la longueur d'onde correspondant à une première fréquence F pour laquelle il existe, sur le diagramme tridimensionnel des courbes F.T = f(W/T, L/T) de dispersion des fréquences de résonance, un premier mode vibratoire à ladite première fréquence F de résonance et un deuxième mode vibratoire à une deuxième fréquence de résonance égale à ou voisine de 2F, en ce que l'étage d'émission comprend un générateur de signaux d'excitation à ladite première fréquence, le spectre de ces signaux d'excitation excluant au moins ladite deuxième fréquence, et en ce que l'étage de réception et de traitement comprend également des moyens de détection des signaux engendrés à ladite deuxième fréquence et correspondant au deuxième mode vibratoire.

**Claims**

1. An apparatus for the investigation of media by ultrasonic echography, comprising a linear array of piezoelectric transducer elements which have a width W and are connected to a stage comprising means for the repeated transmission of ultrasonic signals for the excitation of the transducers, and to a stage comprising means for the reception and processing of the ultrasonic echoes corresponding to the obstacles encountered by the transmitted signals in their propagation direction, characterized in that the thickness T of said transducer elements equals half the wavelength corresponding to a first frequency F for which there exits, in the two-dimensional diagram of the curves F.T = f(W/T) of the dispersion of the resonance frequencies, a first vibratory mode at said first resonance frequency F and a second vibratory mode at a second resonance frequency equal to or approximately equal to 2F, in that the transmitter stage comprises a generator for excitation signals having said first frequency, the spectrum of said excitation signals excluding at least said second frequency, and in that the receiving and processing stage also comprises means for the detection of the signals generated at said second frequency and corresponding to the second vibratory mode.

2. An apparatus for the investigation of media by ultrasonic echography, comprising a two-dimensional array of parallelepiped piezoelectric transducer elements, having a length L and a width W, connected to a stage comprising means for the repeated transmission of ultrasonic signals for the excitation of the transducers, and to a stage for the reception and processing of the ultrasonic echoes corresponding to the obstacles encountered by the transmitted signals in their propagation direction, characterized in that the thickness T of said transducer elements is equal to half the wavelength corresponding to a first frequency F for which there exists, in the three-dimensional diagram of the curves F.T = f(W/T, L/T) of the dispersion of the resonance frequencies, a first vibratory mode at said first resonance frequency F and a second vibratory mode at a second resonance frequency equal to or approximately equal to 2F, in that the transmitter stage comprises a generator for excitation signals having said first frequency, the spectrum of said excitation signals excluding at least said second frequency, and in that the receiving and processing stage also comprises means for the detection of the signals generated at said second frequency and corresponding to the second vibratory mode.

**Patentansprüche**

1. Gerät zum Untersuchen von Medien mittels Ultraschall-Echographie mit einer linearen Anordnung piezoelektrischer Wandlerelemente mit einer Dicke W, wobei dieser Anordnung eine Stufe mit Mitteln zum wiederholten Aussenden von Ultraschallsignalen zum Anregen der Wandler und eine Stufe mit Mitteln zum Empfangen und Bearbeiten von Ultraschallechos entsprechend den in der Ausbreitungsrichtung der ausgesandten Signale begegneten Hindernissen zugeordnet sind, dadurch gekennzeichnet, daß die Dicke T der Wandlerelemente gleich der Hälfte der Wellenlänge entsprechend einer ersten Frequenz F ist, für die im zweidimensionalen Diagramm der Kurven F.T = f(W/T) der Resonanzfrequenzstreuung eine erste Schwingungsbetriebsart auf der ersten Resonanzfrequenz F und eine zweite Schwingungsbetriebsart auf einer zweiten Resonanzfrequenz gleich oder ungefähr gleich 2F eingetragen sind, daß die Emissionsstufe einen Anregungssignalgenerator auf der ersten Frequenz enthält, wobei das Spektrum dieser Anregungssignale wenigstens die zweite Frequenz ausschließt, und daß die Empfangs- und Bearbeitungsstufe ebenfalls Detektormittel für Signale enthält, die auf der zweiten Frequenz erzeugt wurden und der zweiten Schwingungsbetriebsart entsprechen.

2. Gerät zum Untersuchen von Medien mittels Ultraschall-Echographie mit einer zweidimensionalen Anordnung piezoelektrischer parallelepipedischer Wandlerelemente mit einer Länge L und einer Dicke W, wobei dieser Anordnung eine Stufe mit Mitteln zum wiederholten Aussenden von Ultraschallsignalen zum Anregen der Wandler und eine Stufe mit Mitteln zum Empfangen und Bearbeiten von Ultraschallechos entsprechend den in der Ausbreitungsrichtung der ausgesandten Signale begegneten Hindernissen zugeordnet sind, dadurch gekennzeichnet, daß die Dicke T der Wandlerelemente gleich der Hälfte der Wellenlänge entsprechend einer ersten Frequenz F ist, für die im dreidimensionalen Diagramm der Kurven F.T = f(W/T, L/T) der Resonanzfrequenzstreuung eine erste Schwingungsbetriebsart auf der ersten Resonanzfrequenz F und eine zweite Schwingungsbetriebsart auf einer zweiten Resonanzfrequenz gleich oder ungefähr gleich 2F eingetragen sind, daß die Emissionsstufe einen Anregungssignalgenerator auf der ersten Frequenz enthält, wobei das Spektrum dieser Anregungssignale wenigstens die zweite Frequenz ausschließt, und daß die Empfangs- und Bearbeitungsstufe ebenfalls Detektormittel für Signale enthält, die auf der zweiten Frequenz erzeugt wurden und der zweiten Schwingungsbetriebsart entsprechen.

FIG.1

F IG.2

FIG.3

FIG.4